# EUROPÄISCHE PATENTSCHRIFT

(11) **EP 2 692 542 B1**
(45) Veröffentlichungstag und Bekanntmachung des Hinweises auf die Patenterteilung: **29.06.2016**
(21) Anmeldenummer: 13002348.4
(22) Anmeldetag: 02.05.2013
(51) Int. Cl.: B60B 7/01, B60B 7/06, B60B 7/08, B60B 7/02, B60B 21/12, B60C 13/00

(54) **Reifen-Zierring**
Tire trim ring
Bague décorative de pneu

(30) Priorität: 04.08.2012 DE 102012015516
(43) Veröffentlichungstag der Anmeldung: 05.02.2014
(73) Patentinhaber: Melly's GmbH, 78087 Mönchweiler (DE)
(72) Erfinder: Schmitz, Bernd, 79843 Löffingen (DE); Richter, Klaus, 78089 Unterkirnach (DE); Meier, Michael, 78112 St. Georgen (DE); Viebrans, Thomas, 78052 Villingen-Schwenningen (DE)
(74) Vertreter: Binner, Bernhard

(56) Entgegenhaltungen:
- BE-A- 358 345
- FR-E- 36 412
- GB-A- 286 124
- US-A- 5 071 684

## Beschreibung

Die Erfindung betrifft einen Reifen-Zierring nach dem Oberbegriff des Anspruches 1.

In neuerer Zeit ist bei verschiedenen Fahrzeugführern der Wunsch aufgekommen, die im Bereich der schwarzen Seitenwände an "normalen" Fahrzeugen ein dekoratives Ringelement vorzusehen, welches als weißer Ring oder farbig gestalteter Ring ausgebildet sein kann. Hierzu sind insbesondere auch Verfahren bekannt, mittels welchen ein solcher Reifen-Zierring nachträglich auf der Seitenwand aufvulkanisiert werden kann. Dies macht es aber stets notwendig, nach dem Erwerb einer herkömmlichen Bereifung, diese einem zusätzlichen Herstellungsprozess zu unterziehen.

Um nun solche Verfahren nicht anwenden zu müssen, sind auch Konstruktionen der gattungsgemäßen Art bekannt geworden, bei welchen ein solcher Reifen-Zierring zwischen Felge und Reifen umlaufend eingeklemmt wird. Dabei liegt eine sichtbare "Ringwand" des Reifen-Zierringes außenseitig im Bereich der Seitenwand des Reifens an. Im Betrieb führt ein solcher Reifen beim Abrollen auf dem Untergrund auf Grund des abzustützenden Fahrzeuggewichtes mit seiner Lauffläche aber auch mit seinen Seitenwänden stets eine sog. Walkbewegung aus, welche zu einer Walkverformung insbesondere der Seitenwand führt. Diese Walkverformung bewirkt im Bereich der Seitenwände, dass die Seitenwände nach außen "ausbeulen".

Um ein "Einschneiden" der Ringwand insbesondere mit ihrer radial außen liegenden Außenkante des bekannten Reifen-Zierringes beim "Ausbeulen" der Seitenwand zu verhindern, sind solche bekannten Reifen-Zierringe der gattungsgemäßen Art stets aus einem "gummi-elastisch" nachgiebigen Werkstoff hergestellt, so dass die Ringwand insbesondere mit Ihrer umlaufenden Außenkante der Walkverformung der Seitenwand folgen kann. Es hat sich jedoch gezeigt, dass die Ringwand des Reifen-Zierringes während der Walkverformung der Seitenwand des Reifens auch eine Relativbewegung zur Seitenwand in radialer Richtung ausführt. Eine solche Relativbewegung führt, wie insbesondere aus der DE 1 752 709 U bekannt ist, zu einem Abrieb der Seitenwand des Reifens insbesondere im Bereich der Außenkante der Ringwand und somit zur Beschädigung der Seitenwand. Mit zunehmender Betriebsdauer des Reifens kann dies zu einer Verkehrsgefährdung führen.

Auf Grund dieses Gefährdungspotenzials sind die bisher bekannten zwischen Reifenwulst und Felgenhorn klemmbaren Konstruktionen von Reifen-Zierringen lediglich zu Dekor- und Showzwecken einsetzbar. Zur festsitzenden Montage weisen diese bekannten Reifen-Zierringe einen radial nach innen gerichteten, ringförmigen Klemmsteg auf, welcher im Durchmesser kleiner ausgebildet ist als der Außendurchmesser des Felgenhorns einer Felge. Da die Ringwand des Reifen-Zierringes der Walkverformung der Seitenwand folgt, werden solche Reifen-Zierring aus weichen, gummiartigen Kunststoffen oder Gummi hergestellt. Dieser Werkstoff hat auch den Vorteil, dass der einstückig umlaufende Reifen-Zierring über das Felgenhorn unter entsprechender "Verformung" geschoben werden kann, um den ringförmigen Klemmsteg rückseitig bzw. innenseitig am Felgenhorn im Bereich der Felgenschulter zur Anlage bringen zu können. Vor der Montage des Reifen-Zierringes ist der entsprechend zugehörige Reifen auf der Felge zu montieren, so dass nach Aufbringen des erforderlichen Luftdruckes der Reifenwulst des Reifens gegen das Felgenhorn gepresst wird und somit der ringförmige Klemmsteg zwischen diesem Reifenwulst und dem Felgenhorn eingeklemmt wird.

Die Formgebung eines bekannten Reifen-Zierringes ist dabei derart gestaltet, dass die sichtbare, radial außerhalb des Felgenhorns liegende Ringwand des Reifen-Zierringes flächig auf der Seitenwand des Reifens aufliegt. Für reine Showzwecke ist die Anbringung eines solchen Reifen-Zierringes unkritisch, da das Fahrzeug in der Regel nur wenige Meter am Ausstellungsort bewegt wird. Im normalen Straßenverkehr führt jedoch die Deformierung der Seitenwand des Reifens im Betrieb des Fahrzeuges zu einem, oben bereits erwähnten, Abrieb, so dass der Reifen im Bereich seiner Seitenwand soweit zerstört werden kann, dass dies zu einer gänzlichen Zerstörung des Reifens führt.

Weiter ist aus der WO 2009/153666 A1 eine ringförmige Konstruktion bekannt, mittels welcher eine Seitenwand eines Reifens gegen äußere mechanische und/oder thermische Einflüsse geschützt werden kann. Bei diesen "Schutzringen" ist ebenfalls eine Art Klemmring vorgesehen, welcher zwischen dem Reifenwulst eines Reifens und dem Felgenhorn einer Felge feststehend eingeklemmt werden kann. Ausgehend vom Felgenhorn verläuft die radial außerhalb des Felgenhorns angeordnete Ringwand etwa unter 30° zur Drehachse der Felge und führt bogenförmig verlaufend bis annähernd zur Lauffläche des Reifens. Somit ist bei dieser Konstruktion annähernd die gesamte radiale Breite der Seitenwand abgedeckt, um einen möglichst umfassenden Schutz zu erreichen. Die Ringwand soll einen kleineren, inneren Krümmungsradius aufweisen als die Seitenwand des Reifens, so dass die Ringwand in ihrem radial mittleren Bereich einen sehr großen axial seitlichen Abstand zur Seitenwand aufweist. Da dieser Schutzring zum Schutz der Seitenwand des Reifens vorgesehen ist, ist dieser aus einem formstabilen Werkstoff hergestellt, so dass der Schutzring seine Formgebung insbesondere auch bei größeren Geschwindigkeiten beibehält. Um diese Steifigkeit und auch die Schutzwirkung erreichen zu können, ist der Schutzring "mehrschichtig" aufgebaut. Konstruktionsbedingt ist dieser Schutzring an die jeweils vorhandene Querschnittsform eines Reifens, insbesondere im Bereich der Seitenwand anzupassen, um sicherzustellen, dass eine Berührung sicher nicht stattfindet. Auf Grund des bogenförmig gekrümmten Verlaufs muss die Ringwand im Bereich des Felgenhorns in der oben angegebenen Neigung verlaufen, da ansonsten die radial äußere, umlaufende Außenkante der Ringwand die Seitenwand berühren würde.

Des Weiteren sind auch unterschiedliche Reifen- Felgenkombinationen bekannt. So besteht bei einer breiten Felge und einem "schmalen" Reifen kaum die Gefahr, dass die Seitenwand mit einer beispielsweise von radial innen nach außen in axialer Richtung leicht schräg nach außen verlaufenden Ringwand eines Reifen-Zierringes in Berührung kommt. Für diese Fälle sollte der Reifen-Zierring jedoch - auch aus optischen Gründen - keinen zu großen Abstand von der Seitenwand haben, wie dies bei der WO 2009/153666 A1 auch unabhängig von der Reifen- Felgenkombinationen der Fall ist. Bei einem solch großen Abstand können in den Zwischenraum zwischen Ringwand und Seitenwand auch Verunreinigungen in Form beispielsweise von granuliertem Streugut im Winterbetrieb gelangen. Da bei der Konstruktion nach der WO 2009/153666 A1 die radial äußere Endkante der Ringwand des Schutzringes zur Seitenwand hin "gebogen" ist, verbleiben solche Verunreinigungen stets in diesem Zwischenraum, was wiederum zu einem hohen Abrieb der Seitenwand und somit zu einer erheblichen Beschädigung der Seitenwand führt.

Weiter ist aus der FR 36 412 E ein als Schmutzfänger dienender gattungsgemäßer "Reifen-Zierring" bekannt, welcher über einen radial nach innen gerichteten Klemmsteg zwischen dem Felgenhorn und dem Reifenwulst eines auf einer Felge montierten Reifens klemmbar ist. Dieser Klemmsteg ist in radialer Richtung mit derselben "axialen" Dicke ausgestattet, so dass der Klemmsteg im Betrieb in Teilbereichen des Umfanges des Reifen-Tierringes radial zwischen dem Felgenhorn und dem Reifenwulst herausrutschen kann, was zu einer Deformierung des Reifen-Zierringes führt.

Aus der BE 358 345 A ist ein ebenfalls als Schmutzfänger dienender "Reifen-Zierring" bekannt, welcher ebenfalls über einen radial nach innen gerichteten Klemmsteg zwischen dem Felgenhorn und dem Reifenwulst eines auf einer Felge montierten Reifens klemmbar ist. Im radial äußeren Bereich der Seitenwand des Reifens weist dieser Reifen-Zierring einen radial nach innen gerichteten "Vorsprung" auf, welcher an der Seitenwand während des Betriebes anlieget. Damit ergibt sich zwangsläufig bei einer Walkverformung der Seitenwand eine radiale Relativbewegung des Vorsprunges zur Seitenwand des Reifens, was wiederum zu einem Verschleiß der Seitenwand des Reifens führt. Auch ist der Klemmsteg in radialer Richtung mit derselben "axialen" Dicke ausgestattet, so dass der Klemmsteg im Betrieb in Teilbereichen des Umfanges des Reifen-Tierringes radial zwischen dem Felgenhorn und dem Reifenwulst herausrutschen kann, was zu einer Deformierung des Reifen-Zierringes führt.

Aus der GB 286 124 A ist ein weiterer ebenfalls als Schmutzfänger dienender bekannt, welcher ebenfalls über einen radial nach innen gerichteten Klemmsteg zwischen dem Felgenhorn und dem Reifenwulst eines auf einer Felge montierten Reifens klemmbar ist. Auch bei dieser Konstruktion ist der Klemmring derart ausgestaltet, dass dieser im Betrieb zwischen dem Felgenhorn und dem Reifenwulst in radialer Richtung "wandern" kann, was zu einer unerwünschten Deformierung des Reifen-Zierringes führt.

Diesen bekannten "Reifen-Zierringen" ist des Weiteren gemeinsam, dass die Ringwand des Reigen-Zierringes in ihrem radial außen liegenden Bereich zur Seitenwand des Reifens einen äußerst großen Abstand aufweisen, so dass sich in dem sich daraus ergebenden Spalt Verunreinigungen ablagern können, was bei einer Walkverformung des Reifens zur Zerstörung der Seitenwand führen kann.

Andererseits sind auch Reifen- Felgenkombinationen bekannt, bei welchen die Felge schmaler ausgebildet ist und der Reifen breiter. In diesen Fällen verläuft die Seitenwand des Reifens ausgehend vom Felgenhorn zumindest leicht schräg axial nach außen und steht in axialer Richtung über das Felgenhorn bogenförmig hinaus. In diesen Fällen sollte folglich die Ringwand weiter axial nach außen versetzt zum Felgenhorn angeordnet sein und gleichzeitig entsprechend schräg verlaufen, um eine Berührung insbesondere im Bereich der radial äußeren Außenkante der Ringwand mit der Seitenwand sicher zu vermeiden. Mit den bekannten Konstruktionen von Reifen-Zierringen ist das nicht oder nur bedingt erreichbar. Insbesondere müssen die bekannten Konstruktionen von Reifen-Zierringen oder auch -Schutzringen für unterschiedliche Reifen- Felgenkombinationen speziell ausgestaltet werden, um eine Berührung zwischen der Ringwand des Reifenzierringens und der Seitenwand insbesondere im radial äußeren Bereich außerhalb des Felgenhorns sicher zu vermeiden.

Dementsprechend liegt der Erfindung die Aufgabe zugrunde, einen Reifen-Zierring der gattungsgemäßen Art mit einem zwischen dem Reifenwulst und dem Felgenhorn klemmbaren Klemmsteg derart auszugestalten, dass dieser für unterschiedliche Reifen-Felgenkombinationen einsetzbar ist, ohne dass eine Beschädigung der Seitenwand des Reifens insbesondere im radial äußeren Bereich der Außenkante der Ringwand auftreten kann, wobei der maximale Abstand dieses äußeren Kantenbereiches zur Seitenwand auf ein annehmbares Maß begrenzt ist bzw. im Falle des Eintretens von Verunreinigungen diese Verunreinigungen im Betrieb selbständig wieder austreten können.

Die Aufgabe wird erfindungsgemäß zusammen mit den Merkmalen des Oberbegriffes des Anspruches 1 dadurch gelöst, dass die Ringwand bei Druckbeaufschlagung der Druckfläche mit ihrem radial außerhalb der Druckfläche liegenden Bereich und mit ihrer äußeren, umlaufenden Außenkante zur Seitenwand einen Abstand von 0,5 bis 5 mm aufweist, und dass der Klemmsteg im Querschnitt keilförmig ausgebildet ist und im radial inneren Bereich eine größere Dicke aufweist als im Bereich des radial außen liegenden Verbindungsabschnittes und/oder dass der Klemmsteg im Bereich seiner radial innen liegenden Innenkante einen umlaufenden, den Reifenwulst des Reifens hintergreifenden Sicherungssteg aufweist.

Zunächst sei angemerkt, dass mit "radial nach außen vorstehend" eine radiale Richtung ausgehend von der Drehachse eines Rades und damit der an einer Fahrzeugachse montierten Felge gemeint ist. Dementsprechend ist unter "axial nach außen vorstehend" eine axiale Richtung parallel zur Drehachse eines montierten Rades und dem entsprechend der an einer Fahrzeugachse montierten Felge zu verstehen.

Durch die erfindungsgemäße Ausgestaltung wird ein Reifen-Zierring zur Verfügung gestellt, welcher einerseits mit seinem umlaufenden Klemmsteg festsitzend zwischen dem Reifenwulst und dem Felgenhorn klemmend gehalten ist und andererseits eine Berührung des radial außen liegenden Bereichs der Ringwand und der radial außen liegenden Außenkante der Ringwand mit der Seitenwand des Reifens sicher ausgeschlossen ist. Auf Grund der im radial inneren Bereich der Ringwand und radial außerhalb des Felgenhorns liegenden Verdickung und damit zur Seitenwand hin vorstehenden Druckfläche ist der Reifenzierring variabel für eine Vielzahl von Reifen-Felgenkombinationen einsetzbar.

In den Fälle in welchen der Reifen schmaler ausgebildet ist, kommt die Druckfläche mit dem radial inneren Bereich der Seitenwand allenfalls nur leicht in Kontakt oder weist selbst eine Abstand zur Seitenwand auf. In diesem Fall wird die Ringwand über deren Druckfläche nicht axial seitlich nach außen gerückt, so dass der Abstand der radial äußeren Außenkante der Ringwand im Bereich zwischen 0,5 und 5 mm recht klein gehalten werden kann.

In den Fällen, in welchen der Reifen erheblich breiter ist als die Felge, wird auf die Druckfläche der Ringwand im radial inneren Bereich der Ringwand eine "Stellkraft" gegen die Ringwand bewirkt, durch welche die Ringwand mit ihrer radial außen liegenden Außenkante nach außen gedrückt wird, so dass sich auch hierdurch ein Abstand zwischen dieser Außenkante der Ringwand und der Seitenwand im Bereich zwischen 0,5 und 5 mm einstellt. Somit ist der erfindungsgemäße Reifen-Zierring bei vorgegebenem Durchmesser der Felge wahlweise für eine "Normalbereifung" oder auch für eine "Niederquerschnittsbereifung", welche evtl. im Bereich radial außerhalb des Felgehorns noch einen axial seitlich nach außen über die Seitenwand des Reifens leicht vorstehenden Felgeschutzwulst aufweist, einsetzbar.

Die Verdickung der Ringwand mit ihrer zum Reifenwulst hin vorstehenden Druckfläche ist im radial inneren Bereich der Ringwand angeordnet und schließt sich in radialer Richtung nach außen an das Felgenhorn an. Dabei weist die Druckfläche ausgehend vom Felgenhorn vorzugsweise eine radiale Breite zwischen 5 mm und 15 mm auf. In diesem radial inneren Bereich ist die Walkverformung der Seitenwand des Reifens derart gering, dass eine radiale Relativbewegung zwischen der Seitenwand und der Ringwand nicht vorhanden oder zumindest jedenfalls nur derart gering ist, dass eine Beschädigung der Seitenwand in diesem Bereich über die gesamte Lebensdauer des Reifens nicht zu befürchten ist.

Des Weiteren ist ein radiales "Wandern" des Klemmsteges zwischen dem Felgenhorn und dem Reifenwulstes auf Grund seiner speziellen Querschnittsform ausgeschlossen, so unerwünschte Deformierungen des Reifen-Zierringes sicher ausgeschlossen sind. Hierzu kann dieser einerseits keilförmig ausgebildet sein und andererseits auch einen Sicherheitssteg aufweisen, welcher den Reifenwulst umlaufend hintergreift.

Weitere vorteilhafte Ausgestaltungen der Erfindung sind den weiteren Unteransprüchen entnehmbar.

So kann gemäß Anspruch 2 vorgesehen sein, dass der Reifen-Zierring aus einem formstabilen, federelastischen Werkstoff mit einem Zug-E-Modul von wenigstens 1.200 MPa besteht und, dass der Klemmsteg in seiner Formgebung der Formgebung des Felgenhorns angepasst ist und im Betrieb flächig am Felgenhorn anliegt. Durch diese spezielle Ausgestaltung des Reifen-Zierringes wird sichergestellt, dass die Ringwand einerseits durch die Druckbeaufschlagung federelastisch "nach außen" gedrückt werden kann und auch eine genügende Eigenstabilität aufweist. Insbesondere kommen hier Werkstoffe zu Einsatz, welche im Wesentliche "inkompressibel" sind, so dass auch sichergestellt ist, dass bei Druckbeaufschlagung der Druckfläche die Ringwand in diesem Bereich nicht durch eine Deformierung zusammengepresst wird, was ein "axiales Wegdrücken" in ausreichendem Maß behindern würde.

Weiter kann gemäß Anspruch 3 vorgesehen sein, dass der Verbindungsabschnitt bogenförmig verlaufend, der Formgebung des Felgenhorns angepasst ausgebildet ist und zusammen mit der Ringwand über das Felgenhorn axial, seitlich vorsteht. Durch diese Ausgestaltung wird einerseits ein zentrierter Sitz des Reifen-Zierringes "auf" der Felge gewährleistet und andererseits ein zusätzlicher Schutz des Felgenhorns bewirkt.

Gemäß Anspruch 4 kann vorgesehen sein, dass die Ringwand mit ihrer Druckfläche im Querschnitt keilförmig ausgebildet ist und im radial inneren Bereich eine größere Dicke aufweist als im Bereich der radial außen liegenden Außenkante. Durch diese Keilform wird eine möglichst großflächige Anlage der Druckfläche an einer entsprechend ausgebildeten Seitenwand erreicht. Gleichzeitig können größere Stellkräfte im radial inneren Bereich der Ringwand bzw. der Seitenwand mit einer relativ geringen Flächenpressung bewirkt werden, so dass eine Beschädigung der Steinwand im radial etwas weiter außen liegenden Bereich sicher vermieden wird.

In ähnlicher Weise wirkt auch die Ausgestaltung nach Anspruch 5, wonach die Druckfläche der Ringwand eine konvex gebogen verlaufende Oberfläche aufweist.

Nach Anspruch 6 kann vorgesehen sein, dass der Reifen-Zierring im Verbindungsbereich zwischen dem Verbindungsabschnitt und der Ringwand eine Querschnittsverjüngung aufweist. Durch diese Querschnittsverjüngung wird einerseits die Montage des Reifen-Zierringes vereinfacht, da dessen federelastische Nachgiebigkeit durch die Querschnittsverjüngung verbessert ist. Des Weiteren wirkt diese Querschnittsverjüngung als eine Art "Gelenk", so dass die Ringwand bei Druckbeaufschlagung leichte nach außen gedrückt werden kann, der Reifen-Zierring jedoch als ganzes seine Formbeständigkeit beibehält.

Als Werkstoffe können gemäß Anspruch 7 federelastische Werkstoffe in Form von thermoplastischen, federelastischen Kunststoffen oder federelastisch metallischen Werkstoffen vorgesehen sein. Diese Werkstoffe sollen eine Kugeldruckhärte von wenigstens 65 MPa oder eine Shore-Härte (A/D) oder Rockwell-Härte (R/L/M) von wenigstens D65 aufweisen. Solche Werkstoffe zeichnen sich insbesondere auch durch eine hohe "Abriebfestigkeit" und Formstabilität aus, so dass die Oberfläche der frei zugänglichen Ringwand des Reifen-Zierringes gegenüber äußeren - insbesondere mechanischen - Einflüssen sehr robust ist.

Solche Werkstoffe müssen lediglich formstabile federelastische Eigenschaften aufweisen, welche einerseits ein "Aufschieben" über das Felgenhorn gestatten und andererseits eine Formstabilität des montierten Reifen-Zierringes gewährleisten, welche eine unzulässige Verformung des Reifen-Zierringes unabhängig von jeweiligen Betriebszustand verhindert.
So kann gemäß Anspruch 8 der federelastische Werkstoff beispielsweise ein Polypropylen Homopolymer (PP-H) mit einem Zug-E-Modul von wenigstens 1.400 MPa oder ein faserverstärkter Polypropylen Homopolymer (PP-GF20) mit einem Zug-E-Modul von wenigstens 2.500 MPa sein. Anstatt eines glasfaserverstärkten Kunststoffes sind auch andere faserverstärkten Werkstoffe einsetzbar.
Nachfolgend wird anhand der Zeichnung die Erfindung näher erläutert. Die in den Zeichnungen dargestellten Formgebungen des Reifen-Zierringes bezüglich der Querschnittsform sind lediglich schematischer Natur. Es zeigt:
- Fig. 1: eine teilweise Schnittdarstellung einer ersten Ausführungsvariante eines Reifen-Zierringes;
- Fig. 2: eine zweite Ausführungsvariante eines Reifen-Zierringes in teilweise Schnittdarstellung;
- Fig. 3: eine teilweise Schnittdarstellung einer weiteren Ausführungsvariante eines Reifen-Zierringes;
- Fig. 4: eine dritte Ausführungsvariante eines Reifen-Zierringes in seinem, zwischen einem Felgenhorn einer Felge und einem Reifenwulst eines Reifens montierten Zustand.

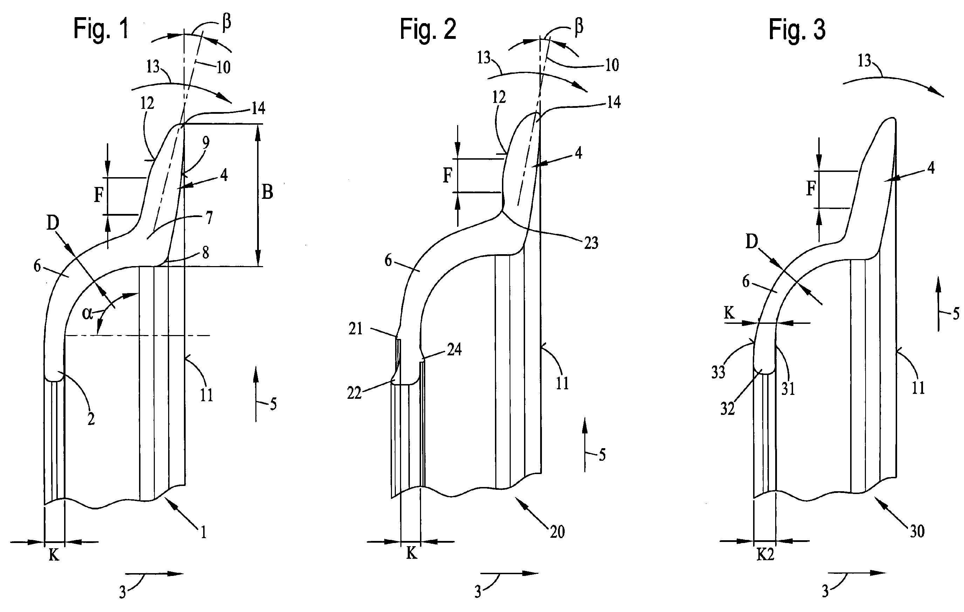

Fig. 1 zeigt eine teilweise Schnittdarstellung einer ersten Ausführungsvariante eines Reifen-Zierringes 1, welcher komplett als umlaufender Ring ausgebildet ist, wie dies aus dem Stand der Technik bekannt ist.

Der Reifen-Zierring 1 aus Fig. 1 weist einen radial nach innen gerichteten Klemmsteg 2 auf, welcher ringförmig ausgebildet ist und zwischen dem Felgenhorn einer Felge und einem Reifenwulst eines auf der Felge montierten Reifens umlaufend klemmbar ist. In axialer Richtung des Pfeiles 3 bildet der Reifen-Zierring 1 eine "nach außen" versetzt zum Klemmsteg 2 angeordnete Ringwand 4, welche im montierten Zustand an einem Rad in Richtung des Pfeiles 5 radial außerhalb des Felgenhorns der Felge angeordnet ist. Die radiale Breite **B** einer solchen Ringwand kann Werte zwischen 15 mm und 35 mm betragen.

Des Weiteren ist aus Fig. 1 erkennbar, dass der Klemmsteg 2 mit der Ringwand 4 über einen bogenförmig verlaufenden Verbindungsabschnitt 6 einstückig in Verbindung steht. Dieser Verbindungsabschnitt 6 erstreckt sich ausgehend vom Klemmsteg 2 über einen Zentriwinkel α von etwa 75° bis 95°. Die Formgebung des Verbindungsabschnittes 6 sowie die Größe des Zentriwinkels α ist von den konkreten Einsatzbedingungen abhängig, insbesondere von der Form des Felgenhorns und der Formgebung des Reifenwulstes des auf der Felge montierten Reifens. Bei der Ausführungsvariante des Reifen-Zierringes 1 nach Fig. 1 weist der Klemmsteg 2 eine Dicke **K** von etwa 2 mm auf. Diese Dicke **K** ist einerseits von den Einsatzbedingungen und andererseits vom verwendeten Werkstoff abhängig und kann Werte zwischen 0,5 mm bis 3 mm aufweisen.

Weiter ist aus Fig. 1 ersichtlich, dass der Verbindungsabschnitt 6 in seiner Dicke **D** stärker ausgebildet ist als der Klemmsteg 2, wobei hier "weiche" Übergänge vorgesehen sind.

Im Übergangsbereich 7 zwischen dem Verbindungsbereich 6 und der Ringwand 4 bildet der Reifen-Zierring eine abgerundete Innenkante 8, so dass der Reifen-Zierring 1 in einfacher Weise über das Felgenhorn einer Felge aufschiebbar ist.

Die Außenfläche 9 der Ringwand 4 kann dabei, wie aus Fig.1 ersichtlich ist, leicht konvex gewölbt ausgebildet sein. Des Weiteren ist erkennbar, dass die Ringwand 4 in ihrer Mittelebene 10 unter einem Winkel β schräg zu einer Radialebene 11 verläuft. Dieser Winkel β kann dabei Werte zwischen 0° und 10° annehmen, was ebenfalls von den konkreten Einsatzbedingungen abhängig ist.

Weiter ist aus Fig. 1 ersichtlich, dass die Innenfläche 12 der Ringwand 4 in axialer Richtung entgegengesetzt zum Pfeil 3 konvex gewölbt ausgebildet ist und in ihrem radial inneren Bereich eine ringförmig, umlaufende Druckfläche **F** bildet.

Diese Druckfläche **F** bewirkt bei einer entsprechenden Druckbeaufschlagung, beispielsweise in axialer Richtung des Pfeiles 3, eine Schwenkbewegung der Ringwand 4 in Richtung des Pfeiles 13, wobei der Verbindungsbereich 7 als eine Art Gelenk fungiert.

Durch diese spezielle Ausgestaltung ist der Reifen-Zierring 1 für unterschiedliche Reifen-/Felgenkombinationen einsetzbar. Diese Druckfläche F kommt in der Regel nicht zur Wirkung, wenn die axiale Breite einer Felge im Bereich des Felgenhorns in Richtung des Pfeiles 3 im Wesentlichen größer ist als die axiale Breite eines montierten Reifens. In einem solchen Fall reicht die in Fig. 1 dargestellte Schrägstellung β aus, um eine Berührung der radial außen liegenden Außenkante 14 mit der Seitenwand eines Reifens zu vermeiden.

Ist die axiale Breite in Richtung des Pfeiles 3 einer Felge im Bereich des Felgenhorns geringer ausgebildet als insbesondere die Reifenbreite im Bereich der Seitenwand, so gelangt die Seitenwand im radial inneren Bereich, insbesondere bei der Montage, mit der Druckfläche **F** in Druckkontakt, so dass eine Stellbewegung der Ringwand 4 in Richtung des Pfeiles 13 bewirkt wird. Durch diese Stellbewegung wird sichergestellt, dass die Ringwand 4 im Bereich ihrer Außenkante 14 einen sicheren Abstand von wenigstens 0,5mm bis maximal 5mm von der Seitenwand aufweist. Durch diese Ausgestaltung ist der Reifen-Zierring bei vorgegebenem Durchmesser variabel für unterschiedliche Reifen-/Felgenkombinationen einsetzbar, ohne dass eine Beschädigung der Seitenwand des Reifens durch die radial außen liegende Außenkante 14 bzw. deren radialen Bereich sicher ausgeschlossen ist.

Weitere Ausführungsvarianten von Reifen-Zierringen zeigen die weiteren Zeichnungsfiguren 2 bis 4.

In den Zeichnungsfiguren 2 bis 4 sind dabei für gleiche Bauteile und gleichartige Bauteile die gleichen Bezugszeichen wie zu der Ausführungsform nach Fig. 1 des Reifen-Zierringes 1 angegeben.

Die Ausführungsvariante des Reifen-Zierringes 20 nach Fig. 2 weist ebenfalls einen Klemmsteg 2, eine Ringwand 4 sowie einen bogenförmig verlaufenden Verbindungsabschnitt 6 auf. Die Dicke **K** des Klemmsteges 2 entspricht bei diesem Ausführungsbeispiel ebenfalls etwa 2 mm, kann jedoch ebenfalls, wie zu Fig. 1 beschrieben ist, je nach Einsatzbedingungen und Werkstoff, auch andere Werte annehmen. Bei der Ausführungsvariante nach Fig. 2 weist der Klemmsteg 2 einen in axialer Richtung entgegen des Pfeiles 3 nach innen vorstehenden Ringsteg 21 auf, welcher im montierten Zustand in den Reifenwulst eines auf einer Felge montierten Reifens eindrückt. Durch einen solchen Ringsteg 21 wird insbesondere die konzentrische Lage des Reifen-Zierringes 20 zur Felge fixiert.

Weiter kann im radial inneren Bereich entgegen des Pfeiles 5 ein weiterer, radial umlaufender Sicherungssteg 22 am Klemmsteg 2 vorgesehen sein, welcher sich ebenfalls in axialer Richtung entgegen des Pfeiles 3 nach innen erstreckt. In entsprechender Formgebung dieses Sicherungssteges 22 hintergreift dieser im montierten Zustand die im Normalfall abgerundete, in radialer Richtung entgegen des Pfeiles 5 innen liegende und in Richtung des Pfeiles 3 axial außen liegende Begrenzungskante des Reifenwulstes. Auch hierdurch lässt sich die konzentrische Lage des montierten Reifen-Zierringes 20 in seinem zwischen dem Reifenwulst und dem Felgenhorn geklemmten Zustand verbessern.

Weiter ist aus Fig. 2 erkennbar, dass der Winkel β zwischen der Mittelebene 10 der Ringwand 4 und der Radialebene 11 kleiner ausgebildet ist als bei der Ausführungsvariante der Fig. 1. Dies ist im Wesentlichen durch die Formgebung der Innenfläche 12 der Ringwand 4 bedingt. Bei der Ausführungsvariante nach Fig. 2 bildet diese Innenfläche 12 in radialer Richtung entgegen des Pfeiles 5 in deren radial innerem Endbereich eine Querschnittsverjüngung beispielsweise in Form einer leichten Einsenkung 23, welche ebenfalls umlaufend vorgesehen ist. Durch diese Einsenkung 23 wird der Querschnitt der Ringwand 4 im radial inneren Bereich "etwas" geschwächt, so dass eine Stellbewegung in Richtung des Pfeiles 13 erleichtert wird. Dementsprechend befindet sich die radial innen liegende Druckfläche **F** im Bereich zwischen der Außenkante 14 der Ringwand 4 und der Einsenkung 23. Durch diese Einsenkung 23 ist diese Druckfläche **F** etwas ausgeprägter ausgebildet. Diese Einsenkung 23 kann auch zur Aufnahme eines im Bereich des Reifenwulstes in Richtung des Pfeiles 3 axial außen vorstehenden Felgenschutzwulstes dienen.

Auch bei der Ausführungsvariante nach Fig. 2 ist der Reifen-Zierring 20 variabel für unterschiedliche Reifen-/Felgenkombinationen einsetzbar. Insbesondere ist auch hier vorgesehen, dass bei Druckbeaufschlagung im Bereich der entgegen des Pfeiles 3 axial nach innen vorstehenden Druckfläche **F**, eine Schwenkbewegung der Ringwand 4 in Richtung des Pfeiles 13 bewirkt wird, so dass auch hier die Ringwand 4 im Bereich ihrer Außenkante 14 die Seitenwand eines montierten Reifens nicht berühren kann und zu diesem einen Abstand von wenigstens 0,5mm bis maximal 5mm aufweist.

Des Weiteren ist aus Fig. 2 noch erkennbar, dass der Klemmsteg 2 in Richtung des Pfeiles 3 axial außenseitig, radial etwa zwischen dem Ringsteg 21 und dem Sicherungssteg 22 liegend, einen weiteren Ringsteg 24 aufweist, welcher ebenfalls zur Fixierung der konzentrischen Lage des Reifen-Zierringes 20 dient.

Die Ausführungsvariante des Reifen-Zierringes 30 aus Fig. 3 ist bezüglich der Ringwand 4 annähernd identisch aufgebaut wie die Ausführungsvariante nach Fig. 1. Diese Ausführungsvariante des Reifen-Zierringes 30 unterscheidet sich im Bereich des Verbindungsabschnittes 6 sowie des Klemmsteges 2 von der Ausführungsvariante nach Fig. 1.

Wie aus Fig. 3 ersichtlich ist, weist der Klemmsteg 2 auf seinem kompletten bogenförmigen Verlauf eine etwa konstante Dicke **D** auf, welche etwa 2 mm beträgt.

Wie weiter aus Fig. 3 ersichtlich ist, verläuft die Innenfläche 31 des Klemmsteges 2 im Wesentlichen parallel zur Radialebene 11. Der radial innere Endbereich 32 ist in seiner Dicke **K2** stärker ausgebildet als die Dicke **K** im radial äußeren Endbereich des Klemmsteges 2. Durch diese Ausgestaltung verläuft die innere, umlaufende Begrenzungsfläche 32 entgegen des Pfeiles 5 radial von außen nach innen und entgegen des Pfeiles 3 in axialer Richtung. Damit bildet der Klemmsteg 2 bei der Ausführungsvariante nach Fig. 3 im Querschnitt eine Art "Keilform", wodurch ebenfalls sichergestellt wird, dass die konzentrische Lage des Reifen-Zierringes 30 im Betrieb zur Felge erhalten bleibt, da über diese "Kegelfläche 32" der Klemmsteg 2 durch den anliegenden Reifenwulst des montierten Reifens radial entgegen des Pfeiles 5 nach innen "gezogen" wird.

Aufgrund der geringeren Dicke **D** des Verbindungsabschnittes 6 wird bei Druckbelastung auf die Druckfläche **F** in Richtung des Pfeiles 3 eine Schwenkbewegung der Ringwand 4 in Richtung des Pfeiles 13 erleichtert.

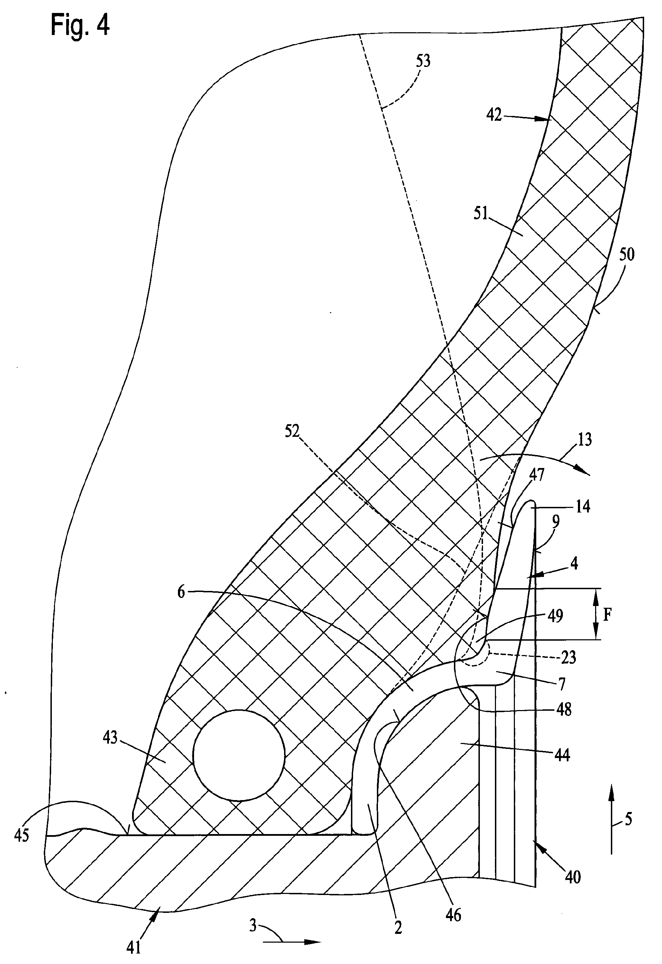

Fig. 4 zeigt eine weitere Ausführungsvariante des Reifen-Zierringes 40, in seinem auf einer Felge 41 montierten Zustand. Auf diese Felge 41 ist ein in teilweisem Schnitt dargestellter Reifen 42 mit seinem Reifenwulst 43 montiert. Hierzu sei angemerkt, dass die Dimensionen sowohl des Reifens 42 als auch der Felge 41 nicht zwingend den tatsächlichen Verhältnissen entsprechen. Fig. 4 soll lediglich das Grundprinzip der Ausgestaltung und Funktionsweise der Reifen-Zierringe 1, 20, 30 und 40 näher darstellen.

Wie aus Fig. 4 ersichtlich ist, weist der Reifen-Zierring 40 ebenfalls einen Klemmsteg 2 auf, welcher klemmend zwischen dem Reifenwulst 43 und einem Felgenhorn 44 der Felge 41 aufgenommen ist. Der innere Durchmesser des Klemmsteges 2 entspricht beim dargestellten Ausführungsbeispiel dem Außendurchmesser des Felgenbettes 45 der Felge 41. Hierzu sei angemerkt, dass dieser Durchmesser auch etwas größer ausgebildet sein kann, da eine Zentrierung des Reifen-Zierringes 40 auch über den bogenförmig verlaufenden Verbindungsabschnitt 6 erfolgen kann, welcher, wie aus Fig. 4 erkennbar am Felgenhorn 44 passend anliegt.

Wie aus Fig. 4 weiter ersichtlich ist, liegt der Reifen-Zierring 40 mit seinem Verbindungsabschnitt 6 flächig an der Innenfläche 46 des Felgenhorns 44 an, wobei aus Fig. 4 ebenfalls ersichtlich ist, dass die gebogene Formgebung des Verbindungsabschnittes 6 dem gebogenen Verlauf dieser Innenfläche 46 angepasst ist. Dabei entspricht die Querschnittsform des Verbindungsabschnittes 6 etwa der Querschnittsform des Verbindungsabschnittes 6 des Reifen-Zierringes 30 aus Fig. 3. Der Klemmsteg 2 ist in seiner Ausgestaltung zumindest ähnlich ausgestaltet wie der Klemmring 2 der Ausführungsvariante des Reifen-Zierringes 1 aus Fig. 1. Des Weiteren kann im Übergangsbereich 7 zwischen dem Verbindungsabschnitt und der Ringwand 4 eine in Fig. 4 gestrichelt dargestellte Einsenkung 23 vorgesehen sein.

Weiter ist aus Fig. 4 ersichtlich, dass die Innenfläche 47 der Ringwand 4 schräg zur Außenfläche 9 der Ringwand 4 verläuft, so dass die Querschnittsform der Ringwand 4 etwa keilförmig ausgebildet ist. Dabei ist die Dicke dieser Ringwand 4 bei der Ausführungsvariante des Reifen-Zierringes 40 aus Fig. 4 im Bereich ihrer Außenkante 14 geringer als im Übergangsbereich 7. Die Druckfläche **F** der Ringwand 4 weist mit ihrer Oberfläche 48 eine leicht zum Reifen 42 hin gewölbte Form auf.

Aus Fig. 4 ist ersichtlich, dass der Reifenwulst 43 bei dieser Ausführungsvariante eines Reifens 42, mit einer Art Felgenschutzwulst 49 im Bereich der Druckfläche **F** an der Ringwand 4 in deren radial, entgegen des Pfeiles 5, inneren Bereich anliegt. Dabei kommt der Reifen 42 bei der Montage, d.h. beim Gleiten seines Reifenwulstes 43 in axialer Richtung des Pfeiles 3 auf dem Felgenbett 45 mit dieser Druckfläche **F** in Kontakt und schwenkt die Ringwand 4 in Richtung des Pfeiles 13 derart, dass deren radial in Richtung des Pfeiles 5 außerhalb der Druckfläche **F** liegende Bereich mit seiner Innenfläche 47, vor allem jedoch zumindest die Bereiche der radial außen liegenden Außenkante 14, einen Abstand zur Außenfläche 50 der Seitenwand 51 des Reifens 42 aufweisen. Dieser Abstand kann dabei zwischen 0,5 mm und 5 mm aufweisen, was letztendlich von der Größe des Felgenschutzwulstes 49 bzw. insgesamt von der Formgebung des Reifenwulstes 43 und der Seitenwand 51 abhängig ist.

Hierzu ist in Fig. 4 beispielhaft ein möglicher Verlauf der Außenfläche 50 der Seitenwand 51 durch die gestrichelte Linie 52 gekennzeichnet. Bei einer solchen Ausführungsform eines Reifens 42 ist ein Felgenschutzwulst 49 nicht vorhanden, so dass die Krafteinwirkung auf die Druckfläche F nicht erfolgt. Gleichwohl bleibt zwischen der Außenkante 14 und der beispielhaft dargestellten gestrichelten Linie 52 der Außenfläche 50 ein ausreichender Abstand, um eine Beschädigung der Seitenwand zu verhindern. Dabei kann die Ringwand 4 entgegen des Pfeiles 13 wenige mm zur gestrichelten Linie 53 verschwenkt sein.

Weiter ist ein möglicher Verlauf der Seitenwand durch eine weitere gestrichelte Linie 53 angedeutet, welche sich beispielsweise ergeben kann, wenn die Felgenbreite der Felge 41 größer ist als die eigentliche Breite des aufgezogenen Reifens. Auch hier ist erkennbar, dass eine Berührung, beispielsweise im Bereich der Druckfläche **F**, mit der Seitenwand 53 bzw. deren Außenfläche nicht auftritt. Es ist erkennbar, dass aufgrund der vorgesehenen, zum Reifen hin vorstehenden Druckflächen **F** ein Reifen-Zierring 1, 20, 30 bzw. 40 variabel für unterschiedliche Reifen-/Felgenkombinationen einsetzbar ist und insbesondere durch Krafteinwirkung auf diese Druckfläche **F** ein Schwenken der Ringwand 4 in Richtung des Pfeiles 13 bewirkt wird, so dass sichergestellt ist, dass eine Berührung, insbesondere im Bereich der radialen Außenkante 14 der Ringwand 4, mit der Außenfläche 50 des Reifens 42 sicher ausgeschlossen ist.

## Patentansprüche

1. Reifen-Zierring (1, 20, 30, 40) mit einem radial nach innen gerichteten, zwischen dem Felgenhorn (44) einer Felge (41) und einem Reifenwulst (43) eines auf der Felge (41) montierten Reifens (42) umlaufend klemmbaren, ringförmigen Klemmsteg (2) und einer im Bereich der radial außerhalb des Felgenhorns (44) liegenden Seitenwand (51) des Reifens (42) angeordneten, umlaufenden Ringwand (4), welche über einen Verbindungsabschnitt (6) einstückig mit dem Klemmsteg (2) in Verbindung steht, wobei der Reifen-Zierring (1, 20, 30, 40) federelastisch nachgiebig ausgebildet ist, wobei die Ringwand (4) in ihrem radial inneren Bereich und radial außerhalb des Felgenhorns (44) der Felge (41) zur Seitenwand (51) des Reifens (42) hin eine Verdickung aufweist und eine axial nach innen vorstehende, umlaufende Druckfläche (F) bildet, welche mit der Seitenwand (51) des Reifens (42) in Druckkontakt bringbar ist und, wobei die Ringwand (4) über den Verbindungsabschnitt (6) derart federelastisch mit dem Klemmsteg (2) in Verbindung steht, dass die Ringwand (4) bei Druckbeaufschlagung ihrer Druckfläche (F) mit ihrem radial außerhalb der Druckfläche (F) liegenden Bereich und mit ihrer äußeren, umlaufenden Außenkante (14) von der Seitenwand weg gedrückt wird, wobei die Ringwand (4) bei Druckbeaufschlagung der Druckfläche (F) mit ihrem radial außerhalb der Druckfläche (F) liegenden Bereich und mit ihrer äußeren, umlaufenden Außenkante (14) zur Seitenwand (51) einen Abstand von 0,5 bis 5 mm aufweist, und wobei der Klemmsteg (2) im Bereich seiner radial innen liegenden Innenkante (32) einen umlaufenden, den Reifenwulst (43) des Reifens (42) hintergreifenden Sicherungssteg (22) aufweist, **dadurch gekennzeichnet, dass** der Klemmsteg (2) im Querschnitt keilförmig ausgebildet ist und im radial inneren Bereich (32) eine größere Dicke (K2) aufweist als im Bereich des radial außen liegenden Verbindungsabschnittes (6).

2. Reifen-Zierring nach Anspruch 1, **dadurch gekennzeichnet, dass** der Reifen-Zierring (1, 20, 30, 40) aus einem formstabilen, federelastischen Werkstoff mit einem Zug-E-Modul von wenigstens 1.200 MPa besteht und, dass der Klemmsteg (2) in seiner Formgebung der Formgebung des Felgenhorns (44) angepasst ist und im Betrieb flächig am Felgenhorn (44) anliegt.

3. Reifen-Zierring nach Anspruch 1 oder 2, **dadurch gekennzeichnet, dass** der Verbindungsabschnitt (6) bogenförmig verlaufend, der Formgebung des Felgenhorns (44) angepasst ausgebildet ist und im Übergangsbereich (7) zur Ringwand (4) zusammen mit der Ringwand (4) über das Felgenhorn (44) axial, seitlich vorsteht.

4. Reifen-Zierring nach einem der Ansprüche 1 bis 3 **dadurch gekennzeichnet, dass** die Ringwand (4) mit ihrer Druckfläche (F) im Querschnitt keilförmig ausgebildet ist und im radial inneren Bereich eine größere Dicke aufweist als im Bereich der radial außen liegenden Außenkante (14).

5. Reifen-Zierring nach einem der Ansprüche 1 bis 4, **dadurch gekennzeichnet**, das die Druckfläche (F) der Ringwand (4) eine konvex gebogen verlaufende Oberfläche (48) aufweist.

6. Reifen-Zierring nach einem der Ansprüche 1 bis 5, **dadurch gekennzeichnet, dass** der Reifen-Zierring (20, 40) im Verbindungsbereich zwischen dem Verbindungsabschnitt und der Ringwand eine Querschnittsverjüngung (23) aufweist.

7. Reifen-Dekorring nach einem der Ansprüche 1 bis 6, **dadurch gekennzeichnet, dass** der federelastische Werkstoff ein thermoplastischer, federelastischer Kunststoff oder ein federelastisch metallischer Werkstoff ist und,
dass der federelastische Werkstoff eine Kugeldruckhärte von wenigstens 65 MPa aufweist oder,
dass der federelastische Werkstoff eine Shore-Härte (A/D) oder Rockwell-Härte (R/L/M) von wenigstens D65 aufweist.

8. Reifen-Dekorring nach einem der Ansprüche 1 bis 6,
**dadurch gekennzeichnet, dass** der federelastische Werkstoff ein Polypropylen Homopolymer (PP-H) mit einem Zug-E-Modul von wenigstens 1.400 MPa ist oder,
dass der federelastische Werkstoff ein faserverstärkter Polypropylen Homopolymer (PP-GF20) mit einem Zug-E-Modul von wenigstens 2.500 MPa ist.

## Claims

1. Tyre trim ring (1, 20, 30, 40) having a radially inwardly directed, ring-shaped clamping web (2) which can be clamped in an encircling manner between the wheel-rim flange (44) of a wheel rim (41) and a tyre bead (43) of a tyre (42) mounted on the wheel rim (41), and having an encircling ring wall (4) which is arranged in the region of the side wall (51), situated radially outside the wheel-rim flange (44), of the tyre (42), which ring wall is integrally connected to the clamping web (2) by way of a connecting section (6), wherein the tyre trim ring (1, 20, 30, 40) is of resiliently elastic, flexible form, wherein the ring wall (4), in its radially inner region and radially outside the wheel-rim flange (44) of the wheel rim (41), has a thickened portion towards the side wall (51) of the tyre (42) and forms an axially inwardly protruding, encircling pressure surface (F) which can be placed in contact with the side wall (51) of the tyre (42) under pressure, wherein the ring wall (4) is connected resiliently elastically by way of the connecting section (6) to the clamping web (2) such that the ring wall (4), when its pressure surface (F) is acted on with pressure, is, with its region situated radially outside the pressure surface (F) and with its outer encircling outer edge (14), pushed away from the side wall, wherein the ring wall (4), when the pressure surface (F) is acted on with pressure, has, with its region situated radially outside the pressure surface (F) and with its outer encircling outer edge (14), a spacing of 0.5 to 5 mm to the side wall (51), and wherein the clamping web (2) has, in the region of its inner edge (32) situated radially at the inside, an encircling securing web (22) which engages behind the tyre bead (43) of the tyre (42), **characterized in that** the clamping web (2) is of wedge-shaped form in cross section and has a greater thickness (K2) in the radially inner region (32) than in the region of the connecting section (6) situated radially at the outside.

2. Tyre trim ring according to Claim 1, **characterized in that** the tyre trim ring (1, 20, 30, 40) is composed of a dimensionally stable, resiliently elastic material with a tensile modulus of elasticity of at least 1200 MPa, and **in that** the clamping web (2) is adapted in terms of its shaping to the shaping of the wheel-rim flange (44) and bears areally against the wheel-rim flange (44) during operation.

3. Tyre trim ring according to Claim 1 or 2, **characterized in that** the connecting section (6) is designed so as to run in curved fashion in a manner adapted to the shaping of the wheel-rim flange (44) and, in the transition region (7) to the ring wall (4), protrudes axially and laterally, together with the ring wall (4), beyond the wheel-rim flange (44).

4. Tyre trim ring according to one of Claims 1 to 3, **characterized in that** the ring wall (4) is, with its pressure surface (F), of wedge-shaped form in cross section and has a greater thickness in the radially inner region than in the region of the outer edge (14) situated radially at the outside.

5. Tyre trim ring according to one of Claims 1 to 4, **characterized in that** the pressure surface (F) of the ring wall (4) has a surface (48) which runs in convexly curved fashion.

6. Tyre trim ring according to one of Claims 1 to 5, **characterized in that** the tyre trim ring (20, 40) has a cross-sectional constriction (23) in the connecting region between the connecting section and the ring wall.

7. Tyre decorative ring according to one of Claims 1 to 6, **characterized in that** the resiliently elastic material is a thermoplastic resiliently elastic plastic or is a resiliently elastic metallic material, and
**in that** the resiliently elastic material has an indentation hardness of at least 65 MPa, or
**in that** the resiliently elastic material has a Shore hardness (A/D) or Rockwell hardness (R/L/M) of at least D65.

8. Tyre decorative ring according to one of Claims 1 to 6, **characterized in that** the resiliently elastic material is a polypropylene homopolymer (PP-H) with a tensile modulus of elasticity of at least 1400 MPa, or
**in that** the resiliently elastic material is a fibre-reinforced polypropylene homopolymer (PP-GF20) with a tensile modulus of elasticity of at least 2500 MPa.

## Revendications

1. Bague décorative de pneu (1, 20, 30, 40) avec une aile de serrage annulaire (2), dirigée radialement vers l'intérieur, pouvant être serrée en périphérie entre le rebord de jante (44) d'une jante (41) et un talon de pneu (43) d'un pneu (42) monté sur la jante (41) et avec une paroi annulaire périphérique (4) disposée dans la région du flanc (51) du pneu (42) située radialement à l'extérieur du rebord de jante (44), qui est reliée d'une pièce à l'aile de serrage (2) par une partie de liaison (6), dans laquelle la bague décorative de pneu (1, 20, 30, 40) est réalisée sous forme déformable élastiquement, dans laquelle la paroi annulaire (4) présente une surépaisseur dans sa région radialement intérieure et radialement à l'extérieur du rebord de jante (44) de la jante (41) en direction du flanc (51) du pneu (42) et forme une face de pression périphérique (F) saillante axialement vers l'intérieur, qui peut être mise en contact de pression avec le flanc (51) du pneu (42) et dans laquelle la paroi annulaire (4) est reliée élastiquement à l'aile de serrage (2) par la partie de liaison (6), de telle manière que la paroi annulaire (4) soit repoussée à l'écart du flanc avec sa région située radialement à l'extérieur de la face de pression (F) et avec son bord extérieur périphérique extérieur (14) en cas d'application de pression à sa face de pression (F), dans laquelle la paroi annulaire (4) présente une distance de 0,5 à 5 mm par rapport au flanc (51) en cas d'application de pression à la face de pression (F) avec sa région située radialement à l'extérieur de la face de pression (F) et avec son bord extérieur périphérique extérieur (14), et dans laquelle l'aile de serrage (2) présente, dans la région de son bord intérieur (32) situé radialement à l'intérieur, une nervure d'ancrage périphérique (22) s'accrochant à l'arrière du talon de pneu (43) du pneu (42), **caractérisée en ce que** l'aile de serrage (2) présente une section transversale en forme de coin et présente dans la région radialement intérieure (32) une plus grande épaisseur (K2) que dans la région de la partie de liaison (6) située radialement à l'extérieur.

2. Bague décorative de pneu selon la revendication 1, **caractérisée en ce que** la bague décorative de pneu (1, 20, 30, 40) se compose d'un matériau élastique de forme stable ayant un module E en traction d'au moins 1200 MPa et **en ce que** l'aile de serrage (2) a une forme adaptée à la forme du rebord de jante (44) et s'applique en service à plat sur le rebord de jante (44).

3. Bague décorative de pneu selon la revendication 1 ou 2, **caractérisée en ce que** la partie de liaison (6) est réalisée avec un tracé en forme d'arc adapté à la forme du rebord de jante (44) et, dans la région de transition (7) vers la paroi annulaire (4), est saillante latéralement, axialement au-delà du rebord de jante (44) en compagnie de la paroi annulaire (4).

4. Bague décorative de pneu selon l'une quelconque des revendications 1 à 3, **caractérisée en ce que** la paroi annulaire (4) avec sa face de pression (F) est réalisée en forme de coin en section transversale et elle présente dans la région radialement intérieure une plus grande épaisseur que dans la région du bord extérieur (14) situé radialement à l'extérieur.

5. Bague décorative de pneu selon l'une quelconque des revendications 1 à 4, **caractérisée en ce que** la face de pression (F) de la paroi annulaire (4) présente une surface courbe convexe (48).

6. Bague décorative de pneu selon l'une quelconque des revendications 1 à 5, **caractérisée en ce que** la bague décorative de pneu (20, 40) présente un amincissement de section transversale (23) dans la région de liaison entre la partie de liaison et la paroi annulaire.

7. Bague de garniture de pneu selon l'une quelconque des revendications 1 à 6, **caractérisée en ce que** le matériau élastique est une matière plastique élastique thermoplastique ou un matériau élastique métallique et **en ce que** le matériau élastique présente une dureté à la pénétration de la bille d'au moins 65 MPa ou **en ce que** le matériau élastique présente une dureté Shore (A/D) ou une dureté Rockwell (R/L/M) d'au moins D65.

8. Bague de garniture de pneu selon l'une quelconque des revendications 1 à 6, **caractérisée en ce que** le matériau élastique est un polypropylène homopolymère (PP-H) avec un module E en traction d'au moins 1400 MPa ou **en ce que** le matériau élastique est un polypropylène homopolymère renforcé par des fibres (PP-GF20) avec un module E en traction d'au moins 2500 MPa.
